# EUROPÄISCHE PATENTANMELDUNG

(11) **EP 0 992 723 A2**
(43) Veröffentlichungstag der Anmeldung: **12.04.2000**
(21) Anmeldenummer: 99118388.0
(22) Anmeldetag: 16.09.1999
(51) Int. Cl.: F16J 15/44

(54) **Drosselspalt-Dichtungsanordnung für die Abdichtung gasförmiger Medien**

(30) Priorität: 08.10.1998 DE 29818004 U
(71) Anmelder: FEODOR BURGMANN DICHTUNGSWERKE GmbH & Co., D-82515 Wolfratshausen (DE)
(72) Erfinder: Dröscher, Peter, 82515 Wolfratshausen (DE); Schulten, Berthold, 82538 Geretsried (DE); Keller, Thomas, 82538 Geretsried (DE); Wolf, Werner, 82291 Mammendorf (DE)
(74) Vertreter: Schmidt, Horst, Dr.

(57) **Zusammenfassung**

Eine Drosselspalt-Dichtungsanordnung für die Abdichtung gasförmiger Medien umfasst einen aus wenigstens einem Paar Ringsegmenten (11) bestehenden, durch einen aussen umgreifenden Federring (5) zusammengehaltenen und in Richtung auf eine Durchmesserverringerung vorgespannten Drosselring (4), wobei in den Ringsegmenten mediumförderwirksame Ausnehmungen (17) zur Schaffung eines Drosselringspaltes zwischen dem Drosselring und einem den Drosselring durchsetzenden rotierenden Bauteil bei dessen Drehung vorgesehen sind. Das Verhältnis einer bei Stillstand des rotierenden Bauteils dem statischen Druck des abzudichtenden Mediums ausgesetzten äusseren Umfangsfläche des Drosselrings (4) zu einer axial einerends durch einen umfänglich sich erstreckenden Dammbereich (10) begrenzten, die mediumförderwirksamen Ausnehmungen (17) enthaltenden und einem ebensolchen statischen Druck bei Stillstand des rotierenden Bauteils ausgesetzten inneren Umfangsfläche des Drosselrings ist grösser oder gleich etwa 0,5 bis kleiner oder gleich etwa 1. Die Drosselspalt-Dichtungsanordnung ist dadurch gegenüber Kräften aus den statischen Drücken soweit entlastet, dass die von den gasförderwirksamen Ausnehmungen aufgebrachten dynamischen Kräfte für eine einen berührungslosen Lauf ermöglichende Dichtspaltbildung ausreichen. Die statischen Drücke können daher 1 bar und mehr betragen.

## Beschreibung

Die Erfindung betrifft eine Drosselspalt-Dichtungsanordnung für die Abdichtung gasförmiger Medien gemäss dem Oberbegriff des Anspruchs 1. Sie betrifft insbesondere eine Drosselspalt-Dichtungsanordnung, die für abzudichtende Drücke von ca. 1 bar und darüber geeignet ist.

Bekannt ist eine Dichtungsanordnung (EP-A-0775 858), bei der eine Drosselspaltdichtung mit einer Gleitringdichtung kombiniert ist. Die bekannte Anordnung dient insbesondere als Heisswasserdichtung und umfasst einen Drosselring, der aus einer Vielzahl von Ringsegmenten zusammengesetzt ist, die aussenumfänglich durch eine Ringfeder zusammengehalten werden, so dass der Drosselring in Umfangsrichtung expandiert oder kontraktiert werden kann. In der Druckschrift wird erwähnt, dass derartige Drosselringe schon zur Abdichtung gasförmiger Medien eingesetzt wurden und hydrodynamisch wirkende Ausnehmungen oder Strukturen enthalten können, die die Drosselspalbildung bei Drehung des rotierenden Bauteiles begünstigen können. Im Rahmen der vorliegenden Erfindung durchgeführte Untersuchungen haben gezeigt, dass mit den bekannten Massnahmen die Abdichtung von gasförmigen Medien nur bei sehr geringen Drücken von weniger als 1 bar möglich ist, während darüber hinausgehende Drücke zu vorzeitigem Verschleiss der bekannten Anordnung wegen Trockenlaufs führen würde. Bekannt sind ferner aus einzelnen Segmenten zusammengesetzte Drosselringe mit fest vorgegebener Spaltbreite für den Drosselspalt. Derartige Dichtungen sind für die Abdichtung gasförmiger Medien aufgrund der hohen Leckverluste nicht oder nur in begrenztem Umfang verwendbar. Um die Leckverluste zu reduzieren, wurde auch schon vorgeschlagen, die Segmente eines Drosselrings in Berührung mit dem rotierenden Bauteil zu halten. Der dadurch erhöhte Verschleiss des Drosselrings bedeutet entweder eine starke Verkürzung der Lebensdauer oder eine Beschränkung auf Anwendungen bei sehr geringen abzudichtenden Drücken.

Der Erfindung liegt die Aufgabe zugrunde, eine Drosselring-Dichtungsanordnung der eingangs erwähnten Gattung zu schaffen, die für die Abdichtung gasförmiger Medien bei erhöhten Drücken unter gleichzeitig verringertem Verschleiss geeignet ist.

Diese Aufgabe wird erfindungsgemäss durch die Merkmale im kennzeichnenden Teil des Anspruchs 1 gelöst. Insbesondere schaffen die erfindungsgemässen Massnahmen eine vollständige oder weitestgehende Entlastung des Drosselrings unter den herrschenden statischen Drücken dergestalt, dass selbst bei hohen statischen Drücken von mehr als 1 bar eine zuverlässige Dichtspaltbildung aufgrund von dynamischen Kräften, wie sie durch gasförderwirksame Ausnehmungen oder Strukturen im Drosselring aufgebracht werden können, zwischen dem sich drehenden Bauteil und dem Drosselring errreicht werden kann. Der Dichtspalt stellt sich entsprechend der Drehzahl des rotierenden Bauteils selbständig ein und ermöglicht einen berührungslosen Lauf des Drosselrings. Bei Stillstand des rotierenden Bauteils wird dagegen der Dichtspalt hermetisch in erster Linie durch eine Vorspannkraft einer auf den Drosselring wirkenden Ringfeder geschlossen und damit eine berührende dichtende Eingriffnahme zwischen Drosselring und rotierendem Bauteil wieder hergestellt. Die resultierenden dynamischen Kräfte reichen bei einem entlasteten Drosselring nach der Erfindung aus, um bei Betrieb des rotierenden Bauteils die Vorspannkraft zu überwinden. Gemäss einer bevorzugten Ausführungsform der Erfindung kann die Drosselspalt-Dichtungsanordnung drehrichtungsunabhängig ausgebildet sein, indem im Drosselring für jede Drehrichtung gasförderwirksame Ausnehmungen oder Strukturen vorgesehen sind, wobei jede deartartige Ausnehmung oder Struktur einen trapezförmigen Grundriss haben kann, der eine hohe Effizienz hinsichtlich des Pumpens des gasförmigen Mediums in den Bereich zwischen Drosselring und rotierendem Bauteil zeigt und damit den berührungslosen Lauf der Dichtungsanordnung fördert.

Die Erfindung wird nachfolgend anhand einer Ausführungsform und der Zeichnung näher erläutert. Es zeigen:
Fig. 1 in schematischer, teilweise fragmentarischer, geschnittener Ansicht eine Drosselspalt-Dichtungsanordnung gemäss einer Ausführungsform der Erfindung im Einbauzustand zur Abdichtung einer Welle gegenüber einem Gehäuse,
Fig. 2 in einer Seitenansicht ein Ringsegment eines Drosselrings für die Drosselring-Dichtungsanordnung nach Fig. 1,
Fig. 3 eine Ansicht des Ringsegments nach Fig. 2 auf dessen inneren Umfang, und
Fig. 4 in einer geschnittenen Ansicht längs der Schnittlinie IV-IV in Fig. 3 ein Detail des Ringsegments.

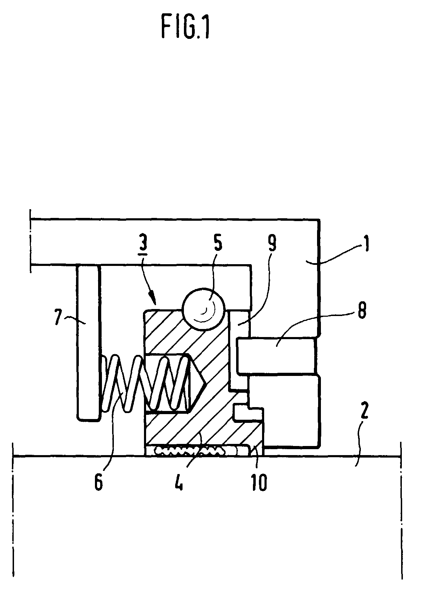

In Fig. 1 trägt die Drosselspalt-Dichtungsanordnung nach der Erfindung das allgemeine Bezugszeichen 3. Die Dichtungsanordnung 3 ist in Fig. 1 in Verbindung mit der Abdichtung einer Welle 2 gegenüber einem Gehäuse 1, z.B. einem Pumpengehäuse oder dgl., gezeigt, das eine Durchtrittsbohrung enthält, durch die die Welle 2 hindurchgeführt ist. Die Dichtungsanordnung 3 umfasst einen auf der Welle 2 aufgesetzten Drosselring 4, der unter der Kraft einer Vorspanneinrichtung 6 in eine abdichtende Beziehung zu einer Fläche des Gehäuses 1 gedrückt und gegen eine Verdrehung relativ zum Gehäuse 1 durch eine Verdrehsicherung in Gestalt eines vom Gehäuse 1 abstehenden, in eine Nut 9 des Drosselrings 4 eingreifenden Zapfens 8 gesichert ist. Andere Verdrehsicherungen können ebenfalls verwendet werden.

Obschon andere Vorspanneinrichtungen verwendet werden können, umfasst die Vorspanneinrichtung bei der vorliegenden Ausführungsform eine Vielzahl von in Umfangsrichtung verteilt angeordneten Federelementen 6 in Gestalt von z.B. Wendelfedern, von denen sich jede einerends am Drosselring 4, insbesondere einer darin vorgesehenen Sackbohrung, und anderenends an einem Widerlager 7 abstützt, das am Gehäuse 1 befestigt ist.

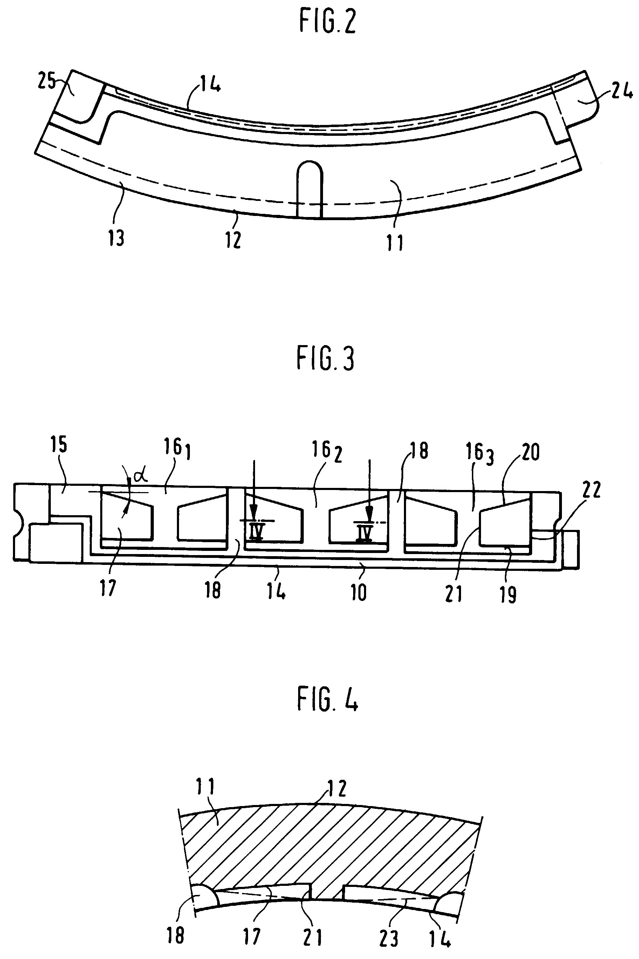

Der Drosselring 4 ist aus einer Vielzahl von Ringsegmenten 11 zusammengesetzt, von denen eines in Fig. 2 gezeigt ist und worauf nachfolgend näher eingegangen wird. Aussenumfänglich des Drosselrings 4 erstreckt sich ein Federring 5, der die Ringsegmente 11 zusammenhält und den so gebildeten Drosselring 4 gleichzeitig mit einer Vorspannkraft beaufschlagt, die eine Durchmesserverringerung des Drosselrings 4 bewirken will. Insbesondere kann die durch den umgelegten Federring 5 aufgebrachte Vorspannkraft eine Verringerung des Durchmessers der Durchführungsbohrung des Drosselrings 4 für die Welle 2 bewirken, so dass der Drosselring 4 erst nach entsprechender umfänglicher Expansion auf der Welle 2 aufgesetzt werden kann. In der in Fig. 1 gezeigten montierten Konfiguration ist der Drosselring 4 durch die Ringfeder 5 gegen die Welle 2 vorgespannt, und wird hierdurch die Oberfläche eines radial vorstehenden Dammbereichs 10 am Innenumfang des Drosselrings 4 in dichtendem Eingriff mit der Oberfläche der Welle 2 gedrückt, um das Innere des Gehäuses 1 bei Stillstand der Welle 2 unter den darin herrschenden statischen Drücken gegenüber der Aussenumgebung abzudichten. Bei Drehung der Welle wird zwischen der Oberfläche des Dammbereichs 10 und der Oberfläche der Welle 2 ein Drosselspalt gebildet, der einen berührungslosen Lauf der Welle 2 in Bezug auf den Drosselring 4 schafft.

Wie erwähnt, besteht der Drosselring 4 aus wenigstens zwei, vorzugsweise jedoch vier oder mehreren Ringsegmenten 11, von denen in Fig. 2 eines gezeigt ist. Jedes Ringsegment 11 umfasst eine längs seines äusseren Umfangs 12 sich erstreckende nut- oder muldenförmige Vertiefung 13 zur Aufnahme der Ringfeder 5 und an den umfänglichen Enden komplementäre Kupplungsmittel zur nicht starren gegenseitigen Verknüpfung benachbarter Ringsegmente 11. Insbesondere kann jedes Ringsegment 11 an einem umfänglichen Ende einen in Umfangsrichtung abstehenden Vorsprung 24 und am gegenüberliegenden Ende eine entsprechend bemessene Ausnehmung 25 aufweisen, so dass der Vorsprung 24 eines Ringsegments 11 in eine Ausnehmung 25 des benachbarten Ringsegments eingreifen kann. Hierdurch bleiben die Ringsegmente 11 relativ zueinander beweglich, so dass der Drosselring 4 gegen die Vorspannkraft der Ringfeder 5 in seiner umfänglichen Abmessung gedehnt werden kann und sich nach Wegnahme der Dehnkraft wieder zusammenziehen kann.

Jedes Ringsegment 11 besteht vorzugsweise aus einem reibungsminimierenden Material mit Notlaufeigenschaft, z.B. einem Kohlenstoffmaterial. Anstelle davon könnte zur Verschleissminimierung auch ein Hartmaterial wie Wolframkarbid oder Siliziumkarbid verwendet werden. Im übrigen sind derartige Ringsegmente grundsätzlich bekannt und können unter der Bezeichnung "Clearance Seal Typ CSR" von der Firma Feodor Burgmann Dichtungswerke GmH & Co., Äussere Sauerlacher Strasse 6-10, D-82502 Wolfratshausen, bezogen werden.

Fig. 3 zeigt die Ausbildung des Ringsegments 11 an dessen der Welle 2 zugewandten inneren Umfang 14. Insbesondere ist innenumfänglich des Ringsegments 11 ein Umfangsbereich 15 definiert, der nahe einer axialen End- oder Stirnseite des Ringsegments 11 durch den Dammbereich 10 begrenzt ist. Der Dammbereich 10 erstreckt sich von einem umfänglichen Ende des Ringsegments kontinuierlich längs nahe der betreffenden End- oder Stirnseite bis zum anderen umfänglichen Ende und ist im Bereich der Kupplungsmittel 24, 25 so geführt ist, dass er eine Fortsetzung des Dammbereichs des benachbarten Ringsegments 11 bilden kann.

Der Dammbereich 10 überragt den inneren Umfangsbereich 15 des Ringsegments 11 radial um ein geeignetes geringes Mass und hat eine freie Oberfläche, die mit der Oberfläche der Welle 2, wie oben erwähnt, zusammenwirken kann. Die axiale Abmessung des Dammbereichs 10 beträgt im allgemeinen nur ein Bruchteil eines bis wenige Millimeter, z.B. 1 bis 2 mm, doch können die Abmessungen des Dammbereichs 10 entsprechend den Abmessungen des Drosselrings 4 und den jeweiligen Anwendungsfällen variieren.

Der innere Umfangsbereich 15 des Ringsegments 11 enthält, wie Fig. 3 zeigt, ein oder mehrere, bei der vorliegenden Ausführungsform drei umfänglich voneinander beabstandete, im Grundriss etwa rechteckförmige Segmentbereiche 16₁, 16₂, 16₃, die etwas aus der Ebene des Umfangsbereichs 15 radial herausragen, ohne jedoch radial den Dammbereich 10 zu überragen. Zwischen benachbarten Segmentbereichen 16₁, 16₂, 16₃ verbleibende Abschnitte des Umfangsbereichs 15 bilden axiale Kanäle 18, die an der dem Dammbereich 10 abgewandten axialen End- oder Stirnseite des Ringsegments 11 ausmünden. Die Kanäle 18 haben die Aufgabe, ein gasförmiges Medium, das an der betreffenden Stirnseite des Ringsegments 11 ansteht, in Richtung auf den Dammbereich 10 strömen zu lassen.

Jeder Segmentbereich 16 enthält ein Paar nach bekannten Techniken, z.B. abrasiven Techniken, bis zu einer geeigneten Tiefe von einigen 10 µm bis einigen 100 µm, z.B. bis etwa 200 µm, eingebrachte förderwirksame Ausnehmungen 17, die geeignet sind, ein gasförmiges Medium, das über die Kanäle 18 zugeführt wurde, bei Drehung der Welle 2 zwischen das Ringsegment 11 und die Welle 2 zu pumpen und dadurch einen dynamischen Druck aufzubauen, der eine umfängliche Spreizung des Drosselrings 4 auslösen kann. Der Drosselring 4 kann dadurch längs des Dammbereichs 10 ausser Berührung mit der Oberfläche der Welle 2 gebracht werden, indem zwischen den Teilen ein Drosseldichtspalt gebildet wird. Die Tiefe jeder förderwirksamen Ausnehmung 17 ist vorzugsweise konstant. Die Tiefe kann jedoch, wie es in Fig. 4 bei 23 angedeutet ist, von einem Bereich nahe einem Kanal 18 zur gegenüberliegenden Kante 21 kontinierlich abnehmen. Die Abmessung des Drosseldichtspalts wird von der Drehgeschwindigkeit der Welle 2 und der Tiefe und Anzahl der förderwirksamen Ausnehmungen 17 beeinflusst. Grundsätzlich gilt, dass mit zunehmender Drehgeschwindigkeit der Welle 2 die Tiefe und/oder Anzahl der förderwirksamen Ausnehmungen 17 verringert werden kann.

Ausser von den genannten Faktoren wird die Wirksamkeit der gasförderwirksamen Ausnehmungen 17 von deren Grundrisskonfiguration beeinflusst. Vorzugsweise hat jede gasförderwirksame Ausnehmung 17 eine im wesentlichen trapezförmige Grundrisskonfiguration mit einem ersten Paar in Umfangsrichtung voneinander beabstandeten, im wesentlichen axial verlaufenden, unterschiedlich langen Kanten 21, 22 und einem zweiten Paar in einer Richtung senkrecht zur Umfangsrichtung bzw. in Axialrichtung beabstandeten Kanten 19, 20.

Die dem Dammbereich 10 benachbarte Kante 19 der zweiten Paarung erstreckt sich vorzugsweise in Umfangsrichtung, während die andere vom Dammbereich 10 abgewandte Kante 20 unter einem Winkel "a" zur Umfangsrichtung steht. Es wurde festgestellt, dass der Winkel "a" vorzugsweise etwa 9° bis 15° betragen sollte. Mit der Neigung der Kante 20 wird erreicht, dass die förderwirksamen Ausnehmungen 17 pflugscharartig durch das gasförmige Medium bewegt werden können, wodurch deren Pumpwirkung erhöht werden kann.

Ferner wurde festgestellt, dass die maximalen Abmessungen jeder gasförderwirksamen Ausnehmung 17 in Umfangs- und in dazu senkrechter Richtung innerhalb bestimmter Verhältnisgrenzen liegen sollten. Insbesondere sollte die maximale Länge jeder gasförderwirksamen Ausnehmung 17 in Umfangsrichtung, d.h. längs der Kante 19, zu derjenigen gemessen in axialer Richtung, d.h. längs der Kante 22, in einem Verhältnis von vorzugsweise zwischen etwa 1,5 und 3 stehen.

Die gasförderwirksamen Ausnehmungen 17 jedes Segmentbereichs 16 sind so zueinander ausgerichtet, dass die kürzeren Kanten 21 der ersten Kantenpaarungen benachbarter gasförderwirksamer Ausnehmungen 17 einander zugewandt liegen, während die längeren Kanten 22 der ersten Kantenpaarungen in Fluidverbindung mit einem betreffenden Kanal 18 zwischen benachbarten Segmentbereichen 16 stehen.

Die von der Vielzahl der gasförderwirksamen Ausnehmungen 17 eingenommene Fläche beträgt vorzugsweise zwischen etwa 15 % und 45 % der Gesamtfläche des Umfangsbereichs 15.

Erfindungsgemäss wurde ferner festgestellt, dass die Bildung des Dichtspalts zur Erzielung eines berührungslosen Laufs der Welle 2 gegenüber dem Dichtring 4 eine Entlastung des Druckrings 4 unter den herrschenden statischen Drücken des anzudichtenden Mediums erfordert. Befriedigende Ergebnisse werden erzielt, wenn die auf den Umfangsbereich 15 am inneren Umfang 14 jedes Ringsegments 11 unter den herrschenden statischen Drücken wirkende Kraft in einem bestimmten Verhältnis zu der Kraft steht, die unter den herrschenden statischen Drücken auf den äusseren Umfang 12 des Ringsegments 11 wirkt. Das Verhältnis der Fläche Aₐ am äusseren Umfang 12 des Ringelements 11 zur Fläche Aᵢ des inneren Umfangsbereichs 15 sollte deshalb kleiner 1, vorzugsweise zwischen etwa 0,5 und etwa 1, höchstvorzugsweise zwischen etwa 0,6 und etwa 0,9 betragen, so dass die auf den inneren Umfang 14 des Drosselrings wirkende Kraft die auf den äusseren Umfang 12 wirkende Kraft im wesentlichen ausgleicht und der Drosselring 4 bei Stillstand der Welle 2 bis auf die Vorspannkraft der Ringfeder 5 im wesentlichen kraftentlastet ist.

Die Erfindung wurde vorausgehend anhand einer bevorzugten Ausführungsform beschrieben, bei der die gasförderwirksamen Ausnehmungen so ausgerichtet sind, dass die gewünschte Drosselspaltbildung unabhängig von der Drehrichtung der Welle erhalten wird. Es versteht sich, dass eine drehrichtungsabhängige Drosselspalt-Dichtungsanordnung im Rahmen der Erfindung ebenfalls vorgesehen werden kann, indem nur die in einer der Drehrichtungen wirksamen gasförderwirksamen Ausnehmungen beibehalten werden, während die in der entgegengesetzten Drehrichtung wirksamen Ausnehmungen weggelassen oder durch solche ersetzt werden, die ebenfalls nur in der einen Drehrichtung wirksam sind. Es versteht sich ferner, dass die Erfindung nicht auf die beschriebene und gezeigte Konfiguration der gasförderwirksamen Ausnehmungen beschränkt ist, sondern dass diese auch durch andere gasförderwirksame Strukturen mit anderen Grundrisskonfigurationen, z.B. T-förmigen, rechteckförmigen, kreisförmigen oder dgl. ersetzt werden könnten. Die beschriebene trapezförmige Umrisskonfiguration der gasförderwirksamen Ausnehmungen wird bevorzugt wegen der dadurch erzielbaren höheren Pumpwirkung, worauf vorausgehend hingewiesen wurde.

## Patentansprüche

1. Drosselspalt-Dichtungsanordnung für die Abdichtung gasförmiger Medien, mit einem aus wenigstens einem Paar Ringsegmenten bestehenden, durch einen Federring zusammengehaltenen und in Richtung auf eine Durchmesserverringerung vorgespannten Drosselring, wobei in den Ringsegmenten mediumförderwirksame Ausnehmungen zur Schaffung eines Drosselringspaltes zwischen dem Drosselring und einem den Drosselring durchsetzenden rotierenden Bauteil bei dessen Drehung vorgesehen sind, dadurch gekennzeichnet, dass das Verhältnis einer bei Stillstand des rotierenden Bauteils dem statischen Druck des abzudichtenden Mediums ausgesetzten äusseren Umfangsfläche des Drosselrings (4) zu einer axial einerends durch einen umfänglich sich erstreckenden Dammbereich (10) begrenzten, die mediumförderwirksamen Ausnehmungen (17) enthaltenden und einem ebensolchen statischen Druck bei Stillstand des rotierenden Bauteils ausgesetzten inneren Umfangsfläche des Drosselrings grösser oder gleich etwa 0,5 bis kleiner oder gleich etwa 1,0 beträgt.

2. Drosselspalt-Dichtungsanordnung nach Anspruch 1, dadurch gekennzeichnet, dass jedes Ringsegment (11) wenigstens ein Paar, in entgegengesetzten Drehrichtungen mediumförderwirksame Ausnehmungen (17) aufweist.

3. Drosselspalt-Dichtungsanordnung nach Anspruch 1 oder 2, dadurch gekennzeichnet, dass die mediumförderwirksamen Ausnehmungen (17) zwischen etwa 10 % und 45 % der inneren Umfangsfläche einnehmen.

4. Drosselspalt-Dichtungsanordnung nach einem der vorhergehenden Ansprüche, dadurch gekennzeichnet, dass jede mediumförderwirksame Ausnehmung (17) einen im wesentlichen trapezförmigen Grundriss mit einem Paar in einer Richtung senkrecht zur Umfangsrichtung beabstandetn Kanten (19,20) umfasst, von denen die dem Dammbereich (10) abgewandte Kante (20) unter einem Winkel zwischen etwa 9° und etwa 15° zur Umfangsrichtung geneigt ist.

5. Drosselspalt-Dichtungsanordnung nach einem der vorhergehenden Ansprüche, dadurch gekennzeichnet, dass das Verhältnis der maximalen Abmessung jeder mediumförderwirksamen Ausnehmung (17) in Umfangsrichtung zu derjenigen in einer dazu senkrechten Rchtung zwischen etwa 1,5 und etwa 3,0 liegt.

6. Drosselspalt-Dichtungsanordnung nach einem der vorhergehenden Ansprüche, dadurch gekennzeichnet, dass jedes Ringsegment (11) wenigstens zwei umfänglich beabstandete Segmentbereiche (16) umfasst, wobei angrenzende mediumförderwirksamen Ausnehmungen (17) benachbarter Segmentbereiche einen gemeinsamen Zuführkanal (18) für das abzudichtende Medium aufweisen.
